# EUROPÄISCHE PATENTSCHRIFT

(11) **EP 1 679 228 B1**
(45) Veröffentlichungstag und Bekanntmachung des Hinweises auf die Patenterteilung: **08.04.2009**
(21) Anmeldenummer: 06100025.3
(22) Anmeldetag: 03.01.2006
(51) Int. Cl.: B60Q 1/32, B60Q 1/26

(54) **Fahrzeugleuchte**
Vehicle lamp
Feu pour véhicule

(30) Priorität: 08.01.2005 DE 102005001103
(43) Veröffentlichungstag der Anmeldung: 12.07.2006
(73) Patentinhaber: Hella KGaA Hueck & Co., 59552 Lippstadt (DE)
(72) Erfinder: Umakanthan, Amarnath Plot No. 31, Door No. 2/175, Iyyappanthangal Chennai 600 056 (IN); Weddemann, Heribert, 59558 Lippstadt (DE); Wolter, Kerstin, 33102 Paderborn (DE)

(56) Entgegenhaltungen:
- EP-A- 1 559 951
- DD-A1- 262 633
- DE-U1- 20 302 614
- US-A- 5 060 121
- US-A- 6 149 288
- US-A1- 2001 006 464
- US-A1- 2003 179 584

## Beschreibung

Die Erfindung betrifft eine Fahrzeugleuchte nach dem Oberbegriff des Patentanspruchs 1.

Aus der DE 100 45 632 A1 ist eine Fahrzeugleuchte bekannt, die ein Gehäuse, eine das Gehäuse abdeckende, bereichsweise lichtdurchlässige Abschlussscheibe, mehrere in der Fahrzeugleuchte angeordnete Lichtquellen und eine zur elektrischen Kontaktierung der Lichtquellen dienende Anschlussleitung aufweist. Die bekannte Fahrzeugleuchte wird mittels seitlich durch Schraubdome geführte Befestigungsschrauben an der Fahrzeugkarosserie festgesetzt. Zur elektrischen Kontaktierung wird die Anschlussleitung von der Gehäuserückseite her in das Gehäuse eingeführt, so dass ein am Anschlussleitungsende angeordneter Stecker in eine entsprechende Aufnahme des Gehäuses eingeführt werden kann. Um den elektrischen Anschluss wasserdicht auszubilden weist der Stecker Dichtungselemente auf, die sich gegen das Gehäuse abstützen. Zusätzlich ist der den Stecker aufnehmende Bereich des Gehäuses mittels einer Kappe gegen Spritzwasser geschützt. Nachteilig an der bekannten Fahrzeugleuchte ist es, dass die Fahrzeugkarosserie eine Mehrzahl von Öffnungen aufweisen muss, da zum Einen die Befestigungsschrauben in entsprechende Löcher der Fahrzeugkarosserie eingeschraubt werden müssen, zum Anderen zusätzlich mindestens eine Öffnung in der Fahrzeugkarosserie angeordnet sein muss, durch die die elektrische Anschlussleitung zu der Fahrzeugleuchte geführt wird. Diese Vielzahl an Öffnungen erzeugen bei der Herstellung der Fahrzeugkarosserie einen erheblichen zeitlichen und somit finanziellen Aufwand und es besteht ein erhöhtes Korrosionsrisiko für die Fahrzeugkarosserie. Zudem ist es Nachteilig, dass der elektrische Anschlussbereich an der Fahrzeugleuchte sehr umständlich gegen Feuchtigkeit abgedichtet werden muss. Ein weiterer Nachteil ergibt sich daraus, dass die elektrische Anschlussleitung nicht beliebig geknickt werden kann, so dass im Bereich der Leitungsdurchführung ein relativ großer Biegeradius entsteht, was eine entsprechend große Öffnung sowohl in der Fahrzeugkarosserie als auch in dem Leuchtengehäuse bedingt.

Aus der nachveröffentlichten EP 1 559 951 A2 ist eine Fahrzeugleuchte mit einem Gehäuse bekannt, in dem eine Lichtquelle sowie eine von der Lichtquelle abführende elektrische Kontaktierung angeordnet sind. Eine vordere Seite des Gehäuses ist durch eine lichtdurchlässige Abschlussscheibe abgedeckt. An dem Gehäuse ist ein Befestigungsdom angeformt, durch den die elektrische Kontaktierung der Lichtquelle hindurchgeführt ist. Zur Halterung der elektrischen Kontaktierung weist der Befestigungsdom Halte- und Rastelemente auf. Nachteilig hieran ist, dass der Querschnitt des Befestigungsdoms relativ groß sein muss.

Aufgabe der Erfindung ist es, eine Fahrzeugleuchte gemäß dem Oberbegriff des Anspruchs 1 derart auszubilden, dass nur eine minimale Anzahl an Öffnungen in die Fahrzeugkarosserie eingebracht werden müssen.

Diese Aufgabe wird durch die Merkmale des Anspruchs 1 gelöst.

Eine erfindungsgemäße Anschlussleitungsführung bietet den Vorteil, dass außer den für die Befestigung der Fahrzeugleuchte dienenden Öffnungen keine weiteren Öffnungen in die Fahrzeugkarosserie eingebracht werden müssen. Dies vereinfacht nicht nur die Herstellung der Fahrzeugkarosserie, sondern auch die Abdichtung der Fahrzeugleuchte gegen Feuchtigkeit, da der Befestigungsdom mittels einer einfachen Dichtungsgeometrie abgedichtet werden kann. Erfindungsgemäß weist der Befestigungsdom in Längsrichtung zumindest eine schlitzartige Öffnung zum Durchführen der Anschlussleitung auf, wodurch auch bereits mit Anschlusssteckern, deren Querschnitt die Öffnung des Befestigungsdoms überragen, vorkonfektionierte Anschlussleitungen durch den Befestigungsdom geführt werden können. Weiterhin ergibt sich der Vorteil, dass der notwendige Biegeradius der Anschlussleitung bereits im Bereich des Befestigungsdomes beginnen kann, so dass sich ein flache Aufbauhöhe der Fahrzeugleuchte ergibt.

Bei einer besonders vorteilhaften Ausgestaltung der Fahrzeugleuchte wist die schlitzartige Öffnung einen geringeren Querschnitt auf, als der Querschnitt der Anschlussleitung. Dies bietet den Vorteil, dass die Anschlussleitung sicher und fest in dem Befestigungsdom gehalten wird und eine derartige Ausbildung somit als Zugentlastung für die Anschlussleitung dient.

Ein besonders einfacher und kostengünstiger Aufbau der Fahrzeugleuchte zeichnet sich dadurch aus, dass der Befestigungsdom einstückig mit dem Gehäuse ausgebildet ist, so dass kein zusätzliches Einzelteil montiert werden muss.

Um die Fahrzeugleuchte an der Fahrzeugkarosserie sehr genau positionieren zu können, ist bei einer vorteilhaften Ausbildung der Fahrzeugleuchte an dem zumindest einen, die Anschlussleitungsdurchführung aufweisenden Befestigungsdom ein zusätzliches Zentrierelement angeordnet. Dies ist insbesondere dann vorteilhaft, wenn die Fahrzeugleuchte an die Fahrzeugkarosserie geklebt wird.

Ein flacher und einfacher Aufbau der Fahrzeugleuchte ist bei einer vorteilhaften Ausgestaltung der Erfindung dadurch gegeben, dass die Lichtquelle zumindest eine auf einer Leiterplatte kontaktierte LED ist. Besonders Vorteilhaft ist es, wenn auf der Leiterplatte weitere zum Betrieb der zumindest einen LED benötigte elektronische Bauelemente angeordnet sind.

Eine vorteilhafte Ausgestaltung der Fahrzeugleuchte zeichnet sich dadurch aus, dass das Gehäuse an der der Lichtabstrahlseite der Fahrzeugleuchte gegenüberliegenden Seite eine Öffnung aufweist, die mittels eines Klebers verschlossen ist. Dadurch dass das Gehäuse eine Öffnung aufweist, kann der im Bereich der Öffnung angeordnete Teil der Leiterplatte elektrisch mit der Anschlussleitung verbunden werden und die wärmeabgebenden elektronischen Bauelemente können ihre Wärme gut an die Fahrzeugkarosserie abgeben, so dass diese als Kühlelement dient. Um die Anschlusselemente und die elektronischen Bauelemente vor Umwelteinflüssen zu schützen, ist die Öffnung mittels eines Klebers verschlossen, wodurch eine einfache, schnelle und kostengünstige Herstellung der Fahrzeugleuchte gewährleistet ist.

Nachfolgend sind Ausführungsbeispiele der Erfindung anhand der Zeichnungen näher erläutert. Es zeigen:
- Figur 1:: eine perspektivische Ansicht einer erfindungsgemäßen Fahrzeugleuchte,
- Figur 2:: eine perspektivische Rückansicht der in Figur 1 gezeigten Fahrzeugleuchte
- Figur 3:: die Rückansicht der in Figur 1 gezeigten Fahrzeugleuchte,
- Figur 4:: einen Schnitt gemäß der Linie A-A aus Figur 3 und
- Figur 5:: eine perspektivische Rückansicht gemäß Figur 2 in einem zweiten Ausführungsbeispiel der erfindungsgemäßen Fahrzeugleuchte.

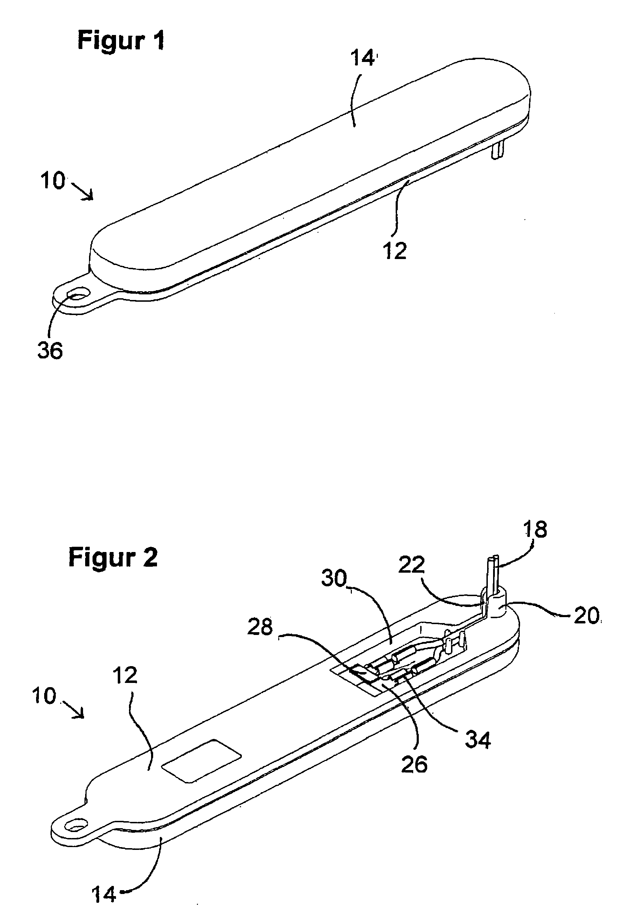

In Figur 1 ist einer erfindungsgemäße Fahrzeugleuchte (10) in einer perspektivischen Ansicht von Vorne dargestellt. Auf das Gehäuse (12) ist beispielsweise mittels Ultraschallschweißen die Abschlussscheibe (14) unlösbar befestigt. An einer Schmalseite weist das Gehäuse (12) ein Befestigungsloch (36) für eine Schraubmontage der Fahrzeugleuchte (10) von der Vorderseite her auf. Figur 2 zeigt ein perspektivische Rückansicht der in Figur 1 gezeigten Fahrzeugleuchte (10). Das durch die Abschlussscheibe (14) verschlossene Gehäuse (12) weist einen von diesem abragenden Befestigungsdom (20) auf, durch dessen schlitzartige Öffnung (22) die zweiadrige Anschlussleitung (18) hindurchgeführt ist. Die Anschlussleitung (18) mündet in einer Öffnung (30) des Gehäuses (12), wo die Steckkontakte (34) der Anschlussleitung (18) den elektrischen Kontakt zu der in der Fahrzeugleuchte (10) angeordneten Leiterplatte (26) herstellen. Auf der Leiterplatte (26) sind im Bereich der Öffnung (30) elektronische Bauelemente (28) für den Betrieb der hier nicht dargestellten, als Lichtquelle dienenden LED angeordnet. Bei der Herstellung der Fahrzeugleuchte (10) wird die Öffnung (30) nach dem Einsetzen der Leiterplatte (26), dem Einführen der Anschlussleitung (18) und der elektrischen Verbindung der beiden Bauteile mittels eines hier nicht dargestellten Klebers verschlossen, so dass die Bauteile vor Umwelteinflüssen geschützt sind.

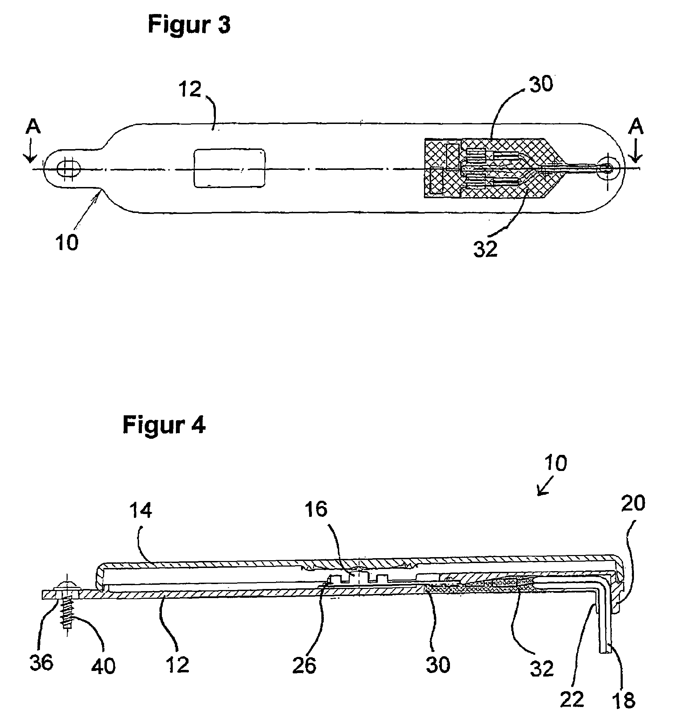

In Figur 3 wird die Fahrzeugleuchte (10) nochmals von der Rückseite her gezeigt, wobei die Öffnung (30) des Gehäuses (12) mittels des Klebers (32) verschlossen ist, wodurch keine weitere Abdichtung erforderlich ist.
Figur 4 zeigt einen Schnitt gemäß der Linie A-A durch die erfindungsgemäße Fahrzeugleuchte (10). Dadurch, dass der Befestigungsdom (20) die schlitzartige Öffnung (22) aufweist, kann die Anschlussleitung (18) schon im Bereich des Befestigungsdoms (20) geknickt werden und ermöglicht so eine möglichst flachbauende Fahrzeugleuchte (10). Die Leiterplatte (26) ist teilweise in der bereits beschriebenen Öffnung (30) angeordnet, die mittels des Klebers (32) verschlossen ist. Der andere Teil der Leiterplatte (26) ist in dem durch das Gehäuse (12) und die Abschlussscheibe (14) gebildeten Innenraum der Fahrzeugleuchte (10) angeordnet und dient dort zur mechanischen und elektrischen Kontaktierung der als Lichtquelle (16) dienenden LED. Zur Befestigung der Fahrzeugleuchte (10) an der Fahrzeugkarosserie wird der Befestigungsdom (20) mit der Anschlussleitung (18) in eine dafür vorgesehene Bohrung der Fahrzeugkarosserie eingeschoben. Nun wird der Befestigungsdom (20) von der Karosserieinnenseite her mittels eines allgemein bekannten Federelementes für glatte Bolzen festgesetzt. An der anderen Schmalseite der Fahrzeugleuchte (10) wird von der Karosserieaußenseite her eine Schraube (40) durch das Befestigungsloch (36) in eine entsprechende Bohrung der Fahrzeugkarosseserie eingeschraubt. Somit werden für die Montage der Fahrzeugleuchte (10) an der Fahrzeugkarosserie nur zwei kleine Bohrungen in der Karosserie benötigt.

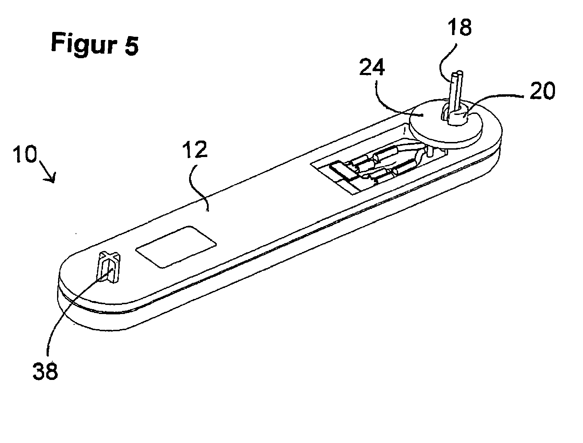

Die in Figur 5 dargestellte Fahrzeugleuchte (10) entspricht bis auf die Befestigungselemente der in Figur 2 gezeigten Fahrzeugleuchte (10), so dass bereits erläuterte Merkmale hier nicht wiederholt werden. Da die Fahrzeugleuchte (10) in dieser Ausführungsform auf die Fahrzeugkarosserie aufgeklebt wird, unterscheidet sich der Aufbau entsprechend zu dem in den anderen Figuren gezeigten Aufbau. Das Gehäuse (12) weist einen Zentrierdom (38) auf, der in eine entsprechende Bohrung der Fahrzeugkarosserie einschiebbar ist, und somit die Fahrzeugleuchte (10) in ihrer Lage fixiert. An der Anschlussleitung (18) ist ein nicht dargestellter, großvolumiger Anschlussstecker angeordnet, der den elektrischen Kontakt zum Fahrzeug herstellt. Da dieser Anschlussstecker bei der Montage der Fahrzeugleuchte (10) von Außen her durch die Fahrzeugkarosserie geführt werden muss, ist die Bohrung in der Fahrzeugkarosserie entsprechend groß ausgebildet. Damit die Lage der Fahrzeugleuchte (10) aber auch bei der Klebemontage einfach und sicher fixiert werden kann, wird vor der Montage ein zusätzliches Zentrierelement (24) auf den Befestigungsdom (20) aufgeschoben, dessen Außendurchmesser dem der großen Bohrung entspricht. Somit sind auch bei der Klebemontage lediglich zwei Bohrungen in die Fahrzeugkarosserie einzubringen. Bei Verzicht auf den zusätzlichen Zentrierdom (38) wäre eine Montage mit nur einer Karosserieöffnung möglich. Selbstverständlich sind hier auch andere bekannte Befestigungsarten sowohl von der Karosserieaußenseite als auch von der Karosserieinnenseite her möglich, wodurch der Kern der Erfindung nicht eingeschränkt wird.

### Bezugszeichenliste:

- 10: Fahrzeugleuchte
- 12: Gehäuse
- 14: Abschlussscheibe
- 16: Lichtquelle
- 18: Anschlussleitung
- 20: Befestigungsdom
- 22: schlitzartige Öffnung
- 24: Zentrierelement
- 26: Leiterplatte
- 28: Bauelemente
- 30: Öffnung
- 32: Kleber
- 34: Steckkontakte
- 36: Befestigungsloch
- 38: Zentrierdom
- 40: Schraube

## Patentansprüche

1. Fahrzeugleuchte (10), insbesondere Seitenmarkierungsleuchte für Fahrzeuge mit einem Gehäuse (12), einer das Gehäuse (12) abdeckenden zumindest bereichsweise lichtdurchlässigen Abschlussscheibe (14), zumindest einer in der Fahrzeugleuchte (10) angeordneten Lichtquelle (16) und zumindest einer zur elektrischen Kontaktierung der Lichtquelle (16) dienenden Anschlussleitung (18), dass die zumindest eine Anschlussleitung (18) durch zumindest einen an dem Gehäuse (12) angeordneten Befestigungsdom (20) in das Gehäuse (12) geführt ist, **dadurch gekennzeichnet, dass** der Befestigungsdom (20) in Längsrichtung zumindest eine schlitzartige Öffnung (22) zum Durchführen der Anschlussleitung (18) aufweist.

2. Fahrzeugleuchte (10) nach Anspruch 1 **dadurch gekennzeichnet, dass** die schlitzartige Öffnung (22) einen geringeren Querschnitt aufweist als der Querschnitt der Anschlussleitung (18).

3. Fahrzeugleuchte (10) nach Anspruch 1 oder 2, **dadurch gekennzeichnet, dass** der Befestigungsdom (20) einstückig mit dem Gehäuse (12) ausgebildet ist.

4. Fahrzeugleuchte (10) nach einem der Ansprüche 1 bis 3, **dadurch gekennzeichnet, dass** an dem zumindest einen, die Anschlussleitungsdurchführung aufweisenden Befestigungsdom (20) ein zusätzliches Zentrierelement (24) angeordnet ist.

5. Fahrzeugleuchte (10) nach einem der Ansprüche 1 bis 4, **dadurch gekennzeichnet, dass** die Lichtquelle (16) zumindest eine auf einer Leiterplatte (26) kontaktierte LED ist.

6. Fahrzeugleuchte (10) nach Anspruch 5 **dadurch gekennzeichnet, dass** auf der Leiterplatte (26) weitere zum Betrieb der zumindest einen LED benötigte elektronische Bauelemente (28) angeordnet sind.

7. Fahrzeugleuchte (10) nach einem der Ansprüche 1 bis 6, **dadurch gekennzeichnet, dass** das Gehäuse (12) an der der Lichtabstrahlseite der Fahrzeugleuchte (10) gegenüberliegenden Seite eine Öffnung (30) aufweist, die mittels eines Klebers (32) verschlossen ist.

## Claims

1. Lamp (10) for motor vehicles, specifically a side marker lamp for motor vehicles, comprised of a housing (12), a cover lens (14) that is transparent at least in some parts and that covers the housing (12), at least one light source (16) installed in the lamp (10), and at least one wire (18) designed to establish the electric contact of the light source (16), wherein the at least one wire (18) is ducted into the housing (12) through at least one dome-shaped fixing element (20) on the housing (12), **characterized by** the dome-shaped fixing element (20) having at least one vertical slot-like opening (22) used to duct the wire (18).

2. Lamp (10) for motor vehicles of claim 1, **characterized in that** the section across the slot-like opening (22) is less than the section across the wire (18).

3. Lamp (10) for motor vehicles of claim 1 or 2, **characterized in that** the dome-shaped fixing element (20) is designed to form a single part with the housing (12).

4. Lamp (10) for motor vehicles of claims 1 to 3, **characterized in that** the at least one dome-shaped fixing element (20) serving as a duct for the electric wire features an additional centering element (24).

5. Lamp (10) for motor vehicles of claims 1 to 4, **characterized in that** the light source (16) consists of at least one LED installed in a circuit board (26).

6. Lamp (10) for motor vehicles of claim 5, **characterized in that** the circuit board (26) is populated with further electronic components (28) needed to operate the at least one LED.

7. Lamp (10) for motor vehicles of claims 1 to 6, **characterized in that** the housing (12) has a opening (30) on the side opposite to the light emission side of the lamp (10), wherein said opening (30) is closed by an adhesive (32).

## Revendications

1. Feu de véhicule (10), notamment feu de gabarit latéral pour véhicules avec un boîtier (12), une glace externe (14) perméable à la lumière au moins par section recouvrant le boîtier (12), au moins une source de lumière (16) disposée dans le feu du véhicule (10) et au moins un câble de branchement (18) servant à établir le contact électrique de la source de lumière (16) de manière qu'au moins un câble de branchement (18) soit guidé dans le boîtier (12) par au moins une broche de fixation (20) se trouvant sur le boîtier (12), **caractérisé en ce que** la broche de fixation (20) présente dans le sens longitudinal au moins une ouverture (22) en forme de fente pour le passage du câble de branchement (18).

2. Feu de véhicule (10) selon la revendication 1, **caractérisé en ce que** l'ouverture (22) en forme de fente présente une section inférieure à la section du câble de branchement (18).

3. Feu de véhicule (10) selon la revendication 1 ou 2, **caractérisé en ce que** la broche de fixation (20) forme un seul élément avec le boîtier (12).

4. Feu de véhicule (10) selon l'une des revendications 1 à 3, **caractérisé en ce qu'**un élément de centrage (24) supplémentaire est disposé au moins sur la broche de fixation (20) présentant le passage du câble de branchement.

5. Feu de véhicule (10) selon l'une des revendications 1 à 4, **caractérisé en ce que** la source de lumière (16) est au moins une LED contactée sur un circuit imprimé (26).

6. Feu de véhicule (10) selon la revendication 5, **caractérisé en ce que** d'autres éléments électroniques (28) nécessaires au fonctionnement d'au moins une LED sont disposés sur le circuit imprimé (26).

7. Feu de véhicule (10) selon l'une des revendications 1 à 6, **caractérisé en ce que** le boîtier (12) présente une ouverture (30) sur le côté opposé au côté rayonnement de la lumière du feu du véhicule (10), laquelle ouverture est fermée par un adhésif (32).
